# EUROPÄISCHE PATENTSCHRIFT

(11) **EP 1 444 446 B1**
(45) Veröffentlichungstag und Bekanntmachung des Hinweises auf die Patenterteilung: **05.10.2005**
(21) Anmeldenummer: 02781309.6
(22) Anmeldetag: 08.11.2002
(51) Int. Cl.: F16B 5/08, B23K 9/20

(54) **BEFESTIGUNGSSYSTEM**
FIXING SYSTEM
SYSTEME DE FIXATION

(30) Priorität: 13.11.2001 DE 10156403
(43) Veröffentlichungstag der Anmeldung: 11.08.2004
(73) Patentinhaber: Bayerische Motoren Werke Aktiengesellschaft, 80809 München (DE); Newfrey LLC, Delaware 19711 (US)
(72) Erfinder: HUBER, Hubert, 84186 Vilsheim (DE); SCHNEIDER, Joachim, 35630 Ehringshausen (DE); PFUNDTNER, Franz, 94377 Steinach (DE); DREXLER, Frank, 63683 Ortenberg (DE)
(74) Vertreter: Steil, Christian
(86) Internationale Anmeldenummer: PCT/EP2002/012468
(87) Internationale Veröffentlichungsnummer: WO 2003/042554

(56) Entgegenhaltungen:
- EP-A- 0 641 944
- DE-A- 19 507 030

## Beschreibung

Die vorliegende Erfindung betrifft ein Befestigungssystem zum Befestigen eines Körpers an einem metallischen Bauteil, insbesondere zum Befestigen eines Körpers an einem Metallblech wie einem Karosserieblech eines Kraftfahrzeuges, mit einem metallischen Gewindebolzen, der mittels Kurzzeit-Lichtbogenschweißen an dem Bauteil befestigt ist, und einer Befestigungsmutter, die auf den Gewindebolzen geschraubt ist und mittels der der Körper an dem Bauteil befestigt ist.

Ein derartiges Befestigungssystem ist aus der US 5,579,986 A bekannt. Das Befestigungssystem wird häufig in der Kraftfahrzeugindustrie verwendet. Dort dient es hauptsächlich dazu, Elemente der Innenausstattung an der Fahrzeugkarosserie zu befestigen.

Der Gewindebolzen wird im sogenannten Kurzzeit-Lichtbogenschweißen auf ein Karosserieblech aufgeschweißt. Das Kurzzeit-Lichtbogenschweißen ist auch als Bolzenschweißen bekannt. Dabei wird ein Metallbolzen (Gewindebolzen) auf das Karosserieblech aufgesetzt. Anschließend wird ein Pilotstrom eingeschaltet und der Metallbolzen wieder etwas gegenüber dem Karosserieblech abgehoben. Dabei wird ein Lichtbogen gezogen. Anschließend wird ein Schweißstrom zugeschaltet, so dass die einander gegenüberliegenden Flächen von Metallbolzen und Karosserieblech angeschmolzen werden. Anschließend wird der Metallbolzen wieder auf das Karosserieblech abgesenkt, so dass sich die Schmelzen vereinigen. Der Schweißstrom wird abgeschaltet und die Gesamtschmelze erstarrt.

Ein System zum Bolzenschweißen ist beispielsweise bekannt aus der Broschüre "Neue TUCKER Technologie. Bolzenschweißen mit System!", Emhart TUCKER, September 1999.

Auf den somit gegenüber dem Karosserieblech vorstehenden Gewindebolzen wird anschließend eine Befestigungsmutter aufgeschraubt. Diese dient dazu, den Körper an dem Karosserieblech festzulegen. Die Befestigungsmutter ist in der Regel aus Kunststoff hergestellt. Der Gewindebolzen kann ein Grobgewindebolzen oder ein Feingewindebolzen sein. An der Befestigungsmutter ist ein entsprechendes Gewinde vorgesehen. Im Falle eines Grobgewindes ist es auch möglich, dass an der Befestigungsmutter lediglich eine Bohrung vorgesehen ist. Das Grobgewinde schneidet dann ein entsprechendes Gegengewinde in die Bohrung.

Auf herkömmlichem Stahlblech werden Stahl-Gewindebolzen aufgeschweißt. Auf in jüngerer Zeit auch häufig verwendete Aluminiumbleche oder sonstige Aluminiumträger werden Aluminiumbolzen aufgeschweißt.

Bei dem Bolzenschweißen handelt es sich um einen hochtechnologischen Prozess. Pro Fahrzeug werden häufig Hunderte derartiger Bolzen verwendet. Die einzelnen Schweißvorgänge erfolgen häufig mit einem Roboter. Die Gesamtschweißzeit pro Schweißvorgang kann dabei im Bereich von Millisekunden liegen.

Wie jeder andere Prozess unterliegt auch der Bolzenschweißprozess Fehlern. Diese aufzudecken ist Sinn und Zweck einer regelmäßigen Qualitätskontrolle.

Bei der Qualitätskontrolle werden die Gewindebolzen auf Festigkeit überprüft. Hierzu wird ein Drehmomentschlüssel oder -schrauber verwendet.

Bei den Qualitätskontrollen mittels Drehmomentschlüssel oder -schrauber kommt es gelegentlich zu Brüchen in den Gewindebolzen und zu Brüchen des Karosseriebleches im Bereich der Schweißverbindung.

Die Gründe für die Fehler können sowohl in fehlerhaften Schweißverbindungen liegen, jedoch auch in fehlerhaften Befestigungsmuttern. Ferner kann es auch vorkommen, dass der Drehmomentschlüssel oder -schrauber falsch eingestellt wurde.

Die Brüche von Gewindebolzen einerseits und von Karosserieblech andererseits treten undefiniert auf. Es ist schwierig feststellbar, was die Ursache für den Fehler gewesen ist.

Ferner erfordert die Nachbearbeitung eines gebrochenen Karosseriebleches einen erheblich größeren Aufwand als die Nachbearbeitung bei einem gebrochenen Bolzen. Denn bei einem Bruch des Bolzens kann ein neuer Bolzen an dieselbe Stelle geschweißt werden, ohne dass die Festigkeit des Karosseriebleches leidet.

Der aus der eingangs genannten US 5,579,986 A bekannte Gewindebolzen weist zwischen zwei Gewindeabschnitten eine Schwächung auf, die dazu dient, einen oberen Gewindeabschnitt zu entfernen, wohingegen ein unterer Gewindeabschnitt an dem Gewindebolzen verbleibt.

Ferner ist es aus der DE 38 02 798 A1 bekannt, einen Bolzen mit einer Sollbruchstelle zu versehen, wobei die Festigkeit der Sollbruchstelle auf die zu verbindenden Bleche abgestimmt ist und eine übermäßige Verformung der Bleche verhindert wird. Die Sollbruchstelle wird immer zum Entfernen des unerwünschten Schaftes des Bolzens benutzt.

Die Druckschrift DE 100 04 720 C1 beschreibt schließlich eine Vorrichtung und ein Verfahren zum Prüfen der Befestigungsstelle eines ein Außengewinde aufweisenden Bolzens auf Torsionsfestigkeit. Zum Prüfen der Schweißstelle auf Torsionsfestigkeit wird ein Antriebsteil über den Spannbolzen in ein Schraubgerät eingespannt und in diesem ein definiertes Drehmoment eingestellt. Dann wird ein Schraubteil auf das Außengewinde des zu prüfenden Schweißbolzens aufgeschraubt. Falls dessen Schweißstelle dem definierten Drehmoment nicht standhält, wird sie durchgetrennt.

Vor diesem Hintergrund besteht das der Erfindung zugrundeliegende Problem darin, ein verbessertes Befestigungssystem der gattungsgemäßen Art anzugeben, das insbesondere einen geringen Nachbearbeitungsbedarf erfordert.

Diese Aufgabe wird bei dem eingangs genannten Befestigungssystem gemäß einem ersten Aspekt dadurch gelöst, dass die Festigkeit der Schweißverbindung zwischen dem Bauteil und dem Gewindebolzen und die Festigkeit des Gewindebolzens selbst so aufeinander abgestimmt sind, dass bei einem Aufbringen eines Drehmomentes auf die Befestigungsmutter, das jenes Drehmoment übersteigt, das bestimmungsgemäß beim Aufschrauben der Befestigungsmutter auf den Gewindebolzen aufgebracht wird, gewährleistet ist, dass der Gewindebolzen bricht, bevor das Bauteil bricht.

Gemäß einem weiteren Aspekt wird die obige Aufgabe bei dem eingangs genannten Befestigungssystem dadurch gelöst, dass die Festigkeit der Schweißverbindung zwischen dem Bauteil und dem Gewindebolzen und die Festigkeit des Gewindes des Gewindebolzens selbst so aufeinander abgestimmt sind, dass bei einem Aufbringen eines Drehmomentes auf die Befestigungsmutter, das jenes Drehmoment übersteigt, das bestimmungsgemäß beim Aufschrauben der Befestigungsmutter auf dem Gewindebolzen aufgebracht wird, gewährleistet ist, dass das Gewinde des Gewindebolzens beschädigt wird, bevor das Bauteil bricht.

Hierdurch wird gewährleistet, dass immer dann, wenn an einen Gewindebolzen mit einer "guten" Schweißverbindung ein zu hohes Drehmoment angelegt wird, in jedem Fall der Bolzen bricht oder das Gewinde beschädigt wird und nicht das Bauteil. Auf diese Weise können Nachbearbeitungskosten aufgrund von fehlerhaft eingestellten Drehmomentschlüsseln oder -schraubern verringert werden. Auch dann, wenn eine falsche (zu feste) Befestigungsmutter verwendet wird, ist gewährleistet, dass eine Beschädigung des Bauteiles weitgehend ausgeschlossen wird, wenn die Schweißverbindung zwischen dem Gewindebolzen und dem Bauteil "gut" ist.

Unter einem "Bruch" soll im vorliegenden Zusammenhang jede Beschädigung eines Elementes (Befestigungsmutter, Gewindebolzen, Bauteil) verstanden werden, bei der ein auf das jeweilige Element aufgebrachtes Drehmoment nicht mehr auf ein darauffolgendes Element der Befestigungskette übertragen werden kann.

Ein Bruch des Bauteiles soll vorliegend allgemein bedeuten, dass das Bauteil strukturell beschädigt wird, und insbesondere, dass es im Bereich der Schweißverbindung ausreißt.

Die Aufgabe wird auf diese Weise vollkommen gelöst.

Von besonderem Vorteil ist es, wenn der Gewindebolzen an einer Stelle geschwächt ist und wenn die Schwächung so ausgelegt ist, dass der Gewindebolzen an dem Ort der Schwächung bricht, bevor das Bauteil im Bereich der Schweißverbindung zwischen dem Bauteil und dem Gewindebolzen bricht.

Diese Ausführungsform hat den Vorteil, dass eine Verstärkung des Bauteiles (Karosserieblech) nicht notwendig ist, um zu gewährleisten, dass bei Aufbringen eines überhöhten Drehmomentes der Gewindebolzen bricht, bevor das Bauteil bricht.

Die Schwächung kann dabei auf eine Vielzahl von Arten erfolgen. Beispielsweise durch die Materialwahl, durch die Konstruktion des Gewindebolzens, etc. Unter einem Bruch soll sowohl der Fall verstanden werden, bei dem das Gewinde des Gewindebolzens unbrauchbar wird, also kein Drehmoment mehr übertragen kann. Alternativ ist unter einem Bruch zu verstehen, dass der Gewindebolzen insgesamt gegenüber seinem Fuß abbricht, im wesentlichen, ohne die Schweißverbindung strukturell zu beschädigen.

Von besonderem Vorzug ist es, wenn der Gewindebolzen eine schwächende Ausnehmung, insbesondere eine Umfangsnut aufweist.

Durch eine derartige schwächende Ausnehmung kann auf konstruktiv einfache Weise gewährleistet werden, dass erfindungsgemäß zunächst der Bolzen bricht, bevor das Bauteil bricht, wenn ein überhöhtes Drehmoment angelegt wird. Die schwächende Ausnehmung kann beispielsweise durch spanendes Abtragen vorgesehen werden.

Eine beispielhafte brauchbare Ausgestaltung einer solchen schwächenden Ausnehmung ist in der GB 2 153 948 A offenbart, deren Offenbarungsgehalt vorliegend durch Bezugnahme enthalten sein soll.

Gemäß einer weiteren bevorzugten Ausführungsform weist der Gewindebolzen einen Flanschabschnitt auf, der in der Nachbarschaft der Schweißverbindung angeordnet ist und gegen den der Körper mittels der Befestigungsmutter oder gegen den die Befestigungsmutter selbst geschraubt ist.

Diese Maßnahme trägt ebenfalls dazu bei, dass bei Aufbringen eines zu hohen Drehmomentes auf jeden Fall der Gewindebolzen bricht, bevor das Bauteil im Bereich der Schweißverbindung bricht. Denn hierdurch ist gewährleistet, dass die bei Aufschrauben der Befestigungsmutter auftretenden Zugkräfte sich an dem Gewindebolzen abstützen und nicht an dem Bauteil.

Folglich ist es möglich, die Schwächung des Gewindebolzens darauf zu konzentrieren, dass die Schwächung hinsichtlich des Drehmomentes bzw. der Torsionskraft erfolgt, die mittels der Befestigungsmutter an den Gewindebolzen angelegt wird.

Dabei ist es besonders bevorzugt, wenn die geschwächte Stelle in der Nachbarschaft des Flanschabschnittes angeordnet ist.

Auf diese Weise kann die Schwächung relativ leicht im Bereich des Übergangs zwischen Flanschabschnitt und dem eigentlichen Gewindeabschnitt (Schaftabschnitt) erfolgen. Im einfachsten Fall ist die Schwächung bereits dadurch gebildet, dass von dem eigentlichen Gewindeabschnitt zu dem Flanschabschnitt ein relativ scharfkantiger Übergang bereitgestellt wird.

Gemäß einer weiteren bevorzugten Ausführungsform ist der Gewindebolzen ein Grobgewindebolzen, dessen Außengewinde beim Aufschrauben der Befestigungsmutter ein Gewinde in deren Bohrung schneidet.

Gemäß einer alternativen Ausführungsform weist der Gewindebolzen ein Feingewinde wie ein metrisches Gewinde auf und die Befestigungsmutter weist ein entsprechendes Innengewinde auf.

Ferner ist es bevorzugt, wenn die Festigkeit des Gewindebolzens und die Festigkeit der Befestigungsmutter so aufeinander abgestimmt ist, dass bei einem Aufbringen eines Drehmomentes auf die Befestigungsmutter, das jenes Drehmoment übersteigt, das bestimmungsgemäß beim Aufschrauben der Befestigungsmutter auf den Gewindebolzen aufgebracht wird, gewährleistet ist, dass die Befestigungsmutter strukturell beschädigt wird, bevor der Gewindebolzen strukturell beschädigt wird.

Die Befestigungsmutter ist in der Regel aus Kunststoff und ein vergleichsweise kostengünstig herzustellendes Element. Insofern ist es von besonderem Vorteil, wenn beim Aufbringen eines zu hohen Drehmomentes auf jeden Fall die Mutter bricht, bevor der Gewindebolzen bricht oder in seiner Funktion sonstwie beeinträchtigt wird.

Insgesamt ergibt sich so eine geschlossene Prozesskette, bei der das Sollbruchmoment der Befestigungsmutter kleiner ist als das Sollbruchmoment des Gewindebolzens, das wiederum kleiner ist als das Sollbruchmoment des Bauteiles bzw. der Schweißverbindung zwischen dem Bauteil und dem Gewindebolzen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Schnittansicht einer ersten Ausführungsform eines erfindungsgemäßen Befestigungssystems;
- Fig. 2: eine Detailansicht einer abgewandelten Ausführungsform eines Befestigungssystems im Schnitt;
- Fig. 3: eine Schnittdarstellung einer weiteren Ausführungsform des erfindungsgemäßen Befestigungssystems; und
- Fig. 4: ein Diagramm mit einer qualitativen Darstellung verschiedener relevanter Drehmomente des Befestigungssystems der vorliegenden Erfindung.

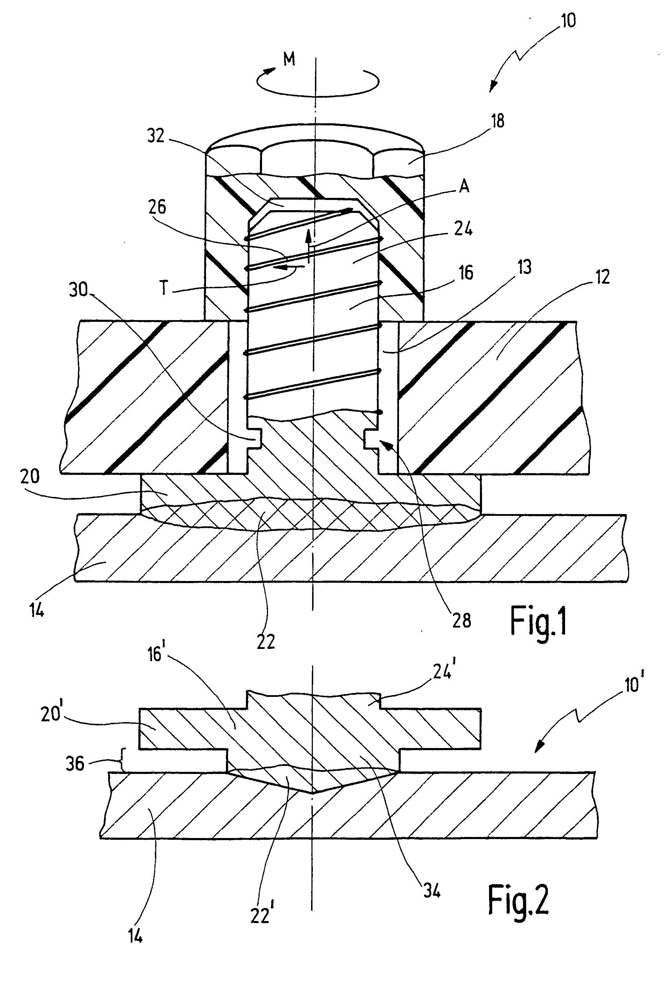

In Fig. 1 ist eine erste Ausführungsform eines Befestigungssystems der vorliegenden Erfindung generell mit 10 bezeichnet.

Das Befestigungssystem 10 dient dazu, einen Körper 12, im dargestellten Fall ein mit einer Öffnung 13 durchsetztes Kunststoffteil, an einem Bauteil 14, im vorliegenden Fall ein Karosserieblech 14 zu befestigen.

Das Befestigungssystem 10 beinhaltet einen Gewindebolzen 16, der im Bolzenschweißverfahren auf das Karosserieblech 16 aufgeschweißt ist. Ferner beinhaltet das Befestigungssystem 10 eine Befestigungsmutter 18 aus Kunststoff, die auf den Gewindebolzen 16 aufschraubbar ist.

Der Gewindebolzen 16 beinhaltet einen Flanschabschnitt 20. Unter einem Flanschabschnitt soll im vorliegenden Fall ein Abschnitt mit größerem Durchmesser verstanden werden, der wenigstens doppelt so groß ist wie der Schaftabschnitt des Gewindebolzens.

Der Gewindebolzen 16 ist im Bolzenschweißverfahren mit der Unterseite seines Flanschabschnittes 20 auf eine Oberseite des Karosseriebleches 14 geschweißt. Die Schweißverbindung 22 ist in Fig. 1 schematisch dargestellt.

An der gegenüberliegenden Seite des Flanschabschnittes 20 ist ein Schaftabschnitt 24 vorgesehen, an dem ein Grobgewinde 26 ausgebildet ist.

Im Bereich des Übergangs zwischen dem Grobgewinde 26 und dem Flanschabschnitt 20 weist der Gewindebolzen 16 ferner einen geschwächten Abschnitt 28 auf, der im vorliegenden Fall durch ein Umfangsnut 30 gebildet ist. Die Umfangsnut 30 stellt eine Sollbruchstelle des Gewindebolzens dar, wie nachstehend noch im Detail erläutert werden wird.

Die Befestigungsmutter 18 weist eine Bohrung 32 auf und der Durchmesser der Bohrung 32 ist an den Durchmesser des Schaftabschnittes 24 angepasst.

Das Grobgewinde 26 ist als selbstschneidendes Gewinde ausgebildet und folglich wird ein Innengewinde in die Bohrung 32 geschnitten, wenn die Befestigungsmutter 18 auf den Gewindebolzen 16 aufgeschraubt wird.

Wie es in Fig. 1 zu erkennen ist, wird der Körper 12 mit seiner Öffnung 13 auf den Gewindebolzen 16 aufgesetzt. Anschließend wird die Befestigungsmutter 18 aufgeschraubt, so dass der Körper 12 zwischen der Oberseite des Flanschabschnittes 20 und der Unterseite der Befestigungsmutter 18 eingespannt wird.

In Fig. 1 ist schematisch angedeutet, wie ein an die Befestigungsmutter 18 angelegtes Drehmoment M im Bereich des Gewindes 26 umgesetzt wird in eine Axialkraft A, die eine Zugkraft auf den Gewindebolzen 16 bewirkt, und in eine Tangentialkraft T, die wiederum ein entsprechendes Moment auf den Gewindebolzen 16 bewirkt.

In Fig. 2 ist eine Modifikation 10' des Befestigungssystems 10 gezeigt.

Bei dem Befestigungssystem 10' ist der Gewindebolzen 16' mit einem Flanschabschnitt 20' ausgebildet, der zwischen einem Schaftabschnitt 24' und einem Schweißabschnitt 34 liegt.

Beim Aufschweißen des Gewindebolzens 16' auf ein Karosserieblech 14 erfolgt eine Schweißverbindung 22' zwischen dem Schweißabschnitt 34 und dem Karosserieblech 14. Folglich verbleibt zwischen der Oberseite des Karosseriebleches 14 und der Unterseite des Flanschabschnittes 20' ein Abstand 36.

Der Durchmesser des Schweißabschnittes 34 ist größer gewählt als der Durchmesser des Schaftabschnittes 24'. Folglich lässt sich insgesamt eine Schweißverbindung 22' mit einer Festigkeit erzielen, die größer ist als jene Festigkeit, die erzielbar ist, wenn der Durchmesser des Schweißabschnittes 34 gleich dem - vorgegebenenen - Durchmesser des Schaftabschnittes 24' wäre.

Durch den Abstand 36 wird eine Hinterlüftung erzielt, so dass Korrosionsprobleme vermieden sind.

Im übrigen unterscheidet sich das Befestigungssystem 10' nicht von dem Befestigungssystem 10, so dass auf dessen Beschreibung verwiesen wird.

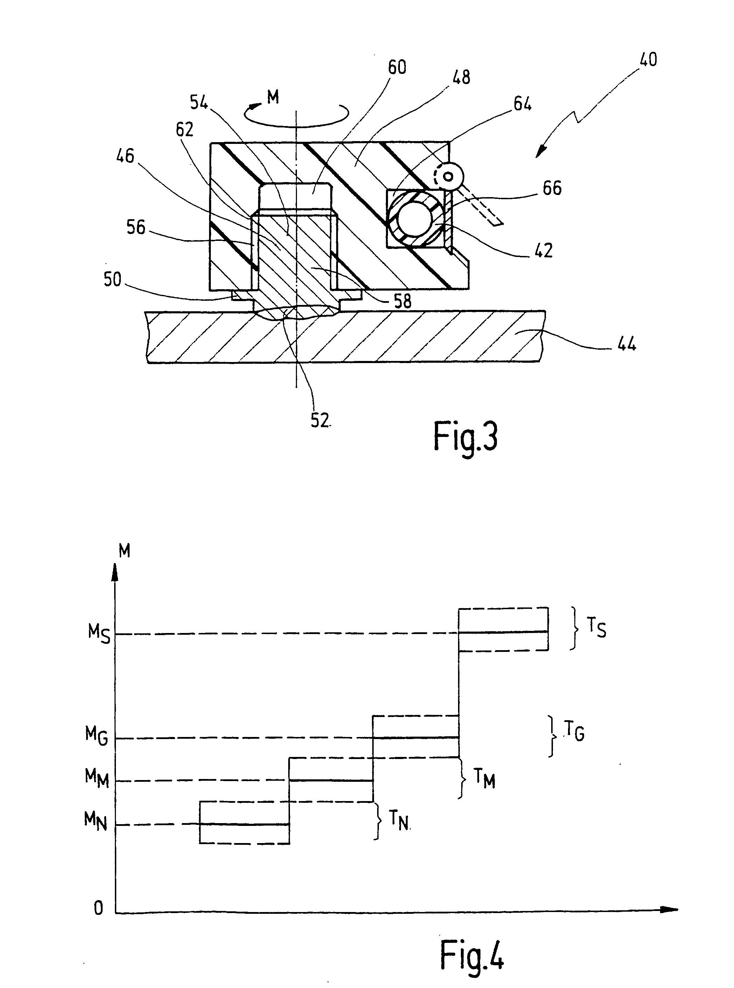

Fig. 3 zeigt eine weitere Ausführungsform eines Befestigungssystems 40.

Das Befestigungssystem 40 dient dazu, einen Körper 42 in Form eines Metallrohres an einem Bauteil 44 wie einem Karosserieblech zu befestigen.

Das Befestigungssystem 40 weist einen Gewindebolzen 46 auf, der mittels eines Bolzenschweißvorganges auf das Karosserieblech 44 geschweißt ist. Ferner beinhaltet das Befestigungssystem 40 eine Befestigungsmutter 48 in Form eines Kunststoff-Clips.

Der Gewindebolzen 46 weist einen Flanschabschnitt 50 auf, der dem Flanschabschnitt 20' des Befestigungssystems 10' der Fig. 2 entspricht.

Eine Schweißverbindung zwischen dem Gewindebolzen 46 und dem Karosserieblech 14 ist bei 52 gezeigt.

Ein Schaftabschnitt 54 des Gewindebolzens 46 ist mit einem metrischen Gewinde 56 versehen.

Der Gewindebolzen 46 ist im Bereich des Übergangs zwischen dem Schaftabschnitt 54 und dem Flanschabschnitt 50 geschwächt, wie es schematisch bei 58 gezeigt ist. Die Schwächung erfolgt bei dem Befestigungssystem 40 allein dadurch, dass der Durchmesser des Schaftabschnittes 54 deutlich kleiner ist als die Durchmesser des Flanschabschnittes 50 und eines nicht näher bezeichneten, darunter liegenden Schweißabschnittes. Ferner ist der Übergang zwischen dem Schaftabschnitt 54 und dem Flanschabschnitt 50 als scharfkantige Ecke ausgebildet.

Die Befestigungsmutter 48 weist eine Bohrung 60 auf, die mit einem metrischen Innengewinde 62 versehen ist. Folglich läßt sich die Befestigungsmutter 48 (der Kunststoff-Clip) auf den Gewindebolzen 46 aufschrauben.

Im vorliegenden Fall wird der Kunststoff-Clip auf den Gewindebolzen 46 aufgeschraubt, bis eine Unterseite des Kunststoff-Clips 48 an einer Oberseite des Flanschabschnittes 50 anschlägt.

Der Körper 42 in Form des Metallrohres ist ausschließlich an dem Kunststoff-Clip 48 festgelegt. In der dargestellten Ausführungsform ist eine Ausnehmung 64 zur Aufnahme des Metallrohres 42 vorgesehen. Ferner weist der Kunststoff-Clip 48 einen gelenkig gelagerten Rastbügel 66 auf, der dazu ausgelegt ist, die Ausnehmung 64 zu verschließen und so das Metallrohr 42 formschlüssig in dem Kunststoff-Clip 48 aufzunehmen.

Es versteht sich, dass bei allen drei Ausführungsformen der Fig. 1 bis 3 der Gewindebolzen 16, 46 und das Karosserieblech 14, 44 jeweils aus Stahl bzw. einer Stahllegierung oder aus Aluminium- bzw. einer Aluminiumlegierung bestehen können.

Auch versteht sich, dass die Befestigungsmuttern 18, 48 aus einem anderen Material als Kunststoff hergestellt sein können, vorausgesetzt, dass die nachstehend mit Bezugnahme auf Fig. 4 erläuterten Festigkeitsanforderungen erfüllt werden.

Bei dem Körper 12 kann es sich auch um ein Metallelement handeln. Entsprechend kann es sich bei dem Körper 42 auch um ein Kunststoffelement handeln.

Bei sämtlichen drei Ausführungsformen sind die Festigkeiten der Einzelelemente aufeinander abgestimmt, wie es in Fig. 4 schematisch dargestellt ist.

In Fig. 4 ist auf der Abszisse ein Drehmoment M aufgetragen, das in der Darstellung der Fig. 1 an die Befestigungsmutter 18 aufgebracht wird, um den Körper 12 an dem Karosserieblech zu befestigen.

Um eine ordnungsgemäße Befestigung des Körpers 12 zu erzielen, erfolgt das Aufschrauben der Befestigungsmutter 18 mit einem gewissen Nenndrehmoment M_{N}, das in Fig. 4 qualitativ als größer Null dargestellt ist.

Dem Nenndrehmoment M_{N} ist ein Toleranzbereich T_{N} zugeordnet, innerhalb dessen das von einem Drehmomentschlüssel oder -schrauber typischerweise aufgebrachte Nenndrehmoment M_{N} variiert.

Beim Aufbringen des Nenndrehmomentes M_{N} wird, fehlerfreie Teile und eine fehlerfreie Schweißverbindung 22 vorausgesetzt, eine ordnungsgemäße Befestigung des Körpers 14 erreicht.

In Fig. 4 ist ferner ein Sollbruchmoment der Befestigungsmutter 18 bei M_{M} gezeigt.

Das Sollbruchmoment M_{M} ist qualitativ höher als das Nenndrehmoment M_{N}. Dem Sollbruchmoment M_{M} ist ein Toleranzbereich T_{M} zugeordnet, innerhalb dessen die Befestigungsmutter 18 bricht bzw. deren Gewinde zerstört wird.

Dabei ist zu beachten, dass die Toleranzbereiche T_{N} und T_{M} sich nicht überschneiden, aber vorzugsweise aneinander angrenzen.

Fig. 4 zeigt ferner ein Sollbruchmoment M_{G} des Gewindebolzens 16. Das Sollbruchmoment M_{G} ist qualitativ höher als das Sollbruchmoment M_{M} der Befestigungsmutter 18. Dem Sollbruchmoment M_{G} ist ein Toleranzbereich zugeordnet, der sich mit dem Toleranzbereich T_{M} der Befestigungsmutter 18 nicht überschneidet, jedoch unmittelbar daran angrenzt.

Schließlich ist in Fig. 4 ein Sollbruchmoment der Schweißverbindung 22 gezeigt, bei M_{S}.

Das Sollbruchmoment M_{S} ist deutlich größer als das Sollbruchmoment M_{G} des Gewindebolzens 16. Dem Sollbruchmoment M_{S} der Schweißverbindung 22 ist ebenfalls ein Toleranzbereich T_{S} zugeordnet.

Der Toleranzbereich T_{S} des Sollbruchmomentes M_{S} der Schweißverbindung 22 überschneidet sich nicht mit dem Toleranzbereich T_{G}, sondern liegt vielmehr erheblich von diesem beabstandet. Folglich ist gewährleistet, dass das maximal von einem Gewindebolzen noch aufnehmbare Sollbruchmoment M_{G} (die obere Grenze des Toleranzbereiches T_{G}) deutlich kleiner ist als das minimale Sollbruchmoment M_{S}, bei dem die Schweißverbindung 22 brechen könnte.

Aus Gründen einer einfachen Darstellung ist in Bezug auf Fig. 4 lediglich von einem Bruch der Schweißverbindung 22 gesprochen worden. Es versteht sich jedoch, dass damit ein Bruch der Schweißverbindung und/oder des Karosseriebleches gemeint sein soll.

Durch diese "geschlossene Prozess- bzw. Befestigungskette" von Nenndrehmoment und Sollbruchmomenten ist bei jedem Betriebszustand gewährleistet, dass immer das Element bricht, dessen Ersatz die wenigsten Kosten verursacht.

Sofern beim Aufschrauben der Befestigungsmutter 18 auf den Körper 12 versehentlich ein zu hohes Drehmoment M angelegt wird (größer als die obere Grenze des Toleranzbereiches T_{N}), bricht in jedem Fall die Mutter bzw. deren Gewinde reißt aus, da das Sollbruchmoment M_{M} der Mutter deutlich kleiner ist als das Sollbruchmoment M_{G} des Gewindebolzens 16, und aufgrund der Tatsache, dass sich die Toleranzbereiche T_{M} und T_{G} nicht überschneiden.

Sofern in der Darstellung der Fig. 1 versehentlich eine falsche Befestigungsmutter 18 gewählt worden ist (eine Befestigungsmutter mit einer zu hohen Festigkeit), ist durch den deutlichen Abstand der Toleranzbereiche T_{G} und T_{M} in jedem Fall gewährleistet, dass zunächst der Gewindebolzen 16 bricht (gewöhnlich an seiner Sollbruchstelle 30 oder durch Zerstörung seines Gewindes), und folglich keine Beschädigung der Schweißverbindung 22 oder des Karosseriebleches 14 auftritt.

Folglich ist für sämtliche Fehlerquellen, die bei dem Befestigungssystem 10 auftreten können, gewährleistet, dass die Schweißverbindung 22 bzw. das Karosserieblech 14 nicht unnötig beschädigt werden.

Bei einer Qualitätskontrolle der Gewindebolzen vor dem Aufschrauben der Befestigungsmutter 18 wird an die Gewindebolzen gewöhnlich ein Prüfmoment angelegt, das gleich dem Sollbruchmoment M_{M} der bestimmungsgemäßen Befestigungsmutter 18 ist. Hierzu wird gewöhnlich eine glasfaserverstärkte Prüfmutter verwendet. Sofern bei dieser Prüfung versehentlich ein zu hohes Drehmoment angelegt wird, ist durch den Abstand der Toleranzbereiche T_{G} und T_{S} gewährleistet, dass in jedem Fall der Gewindebolzen 16 bricht und die Schweißverbindung 22 bzw. das Karosserieblech 14 nicht beschädigt werden.

Die obige Beschreibung der verschiedenen Momente und der geschlossenen Prozesskette ist in gleichem Maße auf die Ausführungsformen der Fig. 2 und 3 anwendbar.

Im Falle der Ausführungsform der Fig. 3 stellt der Kunststoff-Clip 48 die Befestigungsmutter dar.

Es versteht sich, dass die Gewindepaarung zwischen dem Gewindebolzen 16, 46 und der Befestigungsmutter 18, 48 so gewählt sein sollte, dass bei einer Zerstörung des Gewindes der Befestigungsmutter 18, 48 ein Losdrehen dennoch möglich sein sollte, damit vermieden wird, dass beim Abdrehen unnötig hohe Drehmomente auf den Gewindebolzen 16, 46 aufgebracht werden.

Aufgrund der geschlossenen Prozesskette ist die Befestigungsmutter 18, 48 (die gewöhnlich aus Kunststoff ist) das "schwächste Glied". Nächstschwächstes Glied ist der Befestigungsbolzen 16. Die größte Festigkeit weist die Schweißverbindung 22 bzw. 52 auf.

## Patentansprüche

1. Befestigungssystem (10; 40) zum Befestigen eines Körpers (12; 42) an einem metallischen Bauteil (14; 44), insbesondere zum Befestigen eines Körpers (12; 42) an einem Metallblech wie einem Karosserieblech (14; 44) eines Kraftfahrzeuges, mit einem metallischen Gewindebolzen (16; 46), der mittels Kurzzeit-Lichtbogenschweißen an dem Bauteil (14; 44) befestigt ist, und einer Befestigungsmutter (18; 48), die auf den Gewindebolzen (16; 46) geschraubt ist und mittels der der Körper (12; 42) an dem Bauteil (14; 44) befestigt ist,
**dadurch gekennzeichnet, dass**
die Festigkeit der Schweißverbindung (22; 52) zwischen dem Bauteil (14; 44) und dem Gewindebolzen (16; 46) und die Festigkeit des Gewindebolzens (16; 46) selbst so aufeinander abgestimmt sind, dass bei einem Aufbringen eines Drehmomentes (M) auf die Befestigungsmutter, das jenes Drehmoment (M_{N}) übersteigt, das bestimmungsgemäß beim Aufschrauben der Befestigungsmutter (18; 48) auf den Gewindebolzen (16; 46) aufgebracht wird, gewährleistet ist, dass der Gewindebolzen (16; 46) bricht, bevor das Bauteil (14; 44) bricht.

2. Befestigungssystem (10; 40) zum Befestigen eines Körpers (12; 42) an einem metallischen Bauteil (14; 44), insbesondere zum Befestigen eines Körpers (12; 42) an einem Metallblech wie einem Karosserieblech (14; 44) eines Kraftfahrzeuges, mit einem metallischen Gewindebolzen (16; 46), der mittels Kurzzeit-Lichtbogenschweißen an dem Bauteil (14; 44) befestigt ist, und einer Befestigungsmutter (18; 48), die auf den Gewindebolzen (16; 46) geschraubt ist und mittels der der Körper (12; 42) an dem Bauteil (14; 44) befestigt ist,
**dadurch gekennzeichnet, dass**
die Festigkeit der Schweißverbindung (22; 52) zwischen dem Bauteil (14; 44) und dem Gewindebolzen (16; 46) und die Festigkeit des Gewindes des Gewindebolzens (16; 46) selbst so aufeinander abgestimmt sind, dass bei einem Aufbringen eines Drehmomentes (M) auf die Befestigungsmutter, das jenes Drehmoment (M_{N}) übersteigt, das bestimmungsgemäß beim Aufschrauben der Befestigungsmutter (18; 48) auf den Gewindebolzen (16; 46) aufgebracht wird, gewährleistet ist, dass das Gewinde des Gewindebolzens (16; 46) beschädigt wird, bevor das Bauteil (14; 44) bricht.

3. Befestigungssystem nach Anspruch 1, **dadurch gekennzeichnet, dass** der Gewindebolzen (16; 46) an einer Stelle (28; 58) geschwächt ist und dass die Schwächung (28; 58) so ausgelegt ist, dass der Gewindebolzen (16; 46) an dem Ort der Schwächung (28; 58) bricht, bevor das Bauteil (14; 44) im Bereich der Schweißverbindung (22; 52) zwischen dem Bauteil (14; 44) und dem Gewindebolzen (16; 46) bricht.

4. Befestigungssystem nach Anspruch 3, **dadurch gekennzeichnet, dass** der Gewindebolzen (16) eine schwächende Ausnehmung, insbesondere eine Umfangsnut (30) aufweist.

5. Befestigungssystem nach einem der Ansprüche 1 - 4, **dadurch gekennzeichnet, dass** der Gewindebolzen (14; 46) einen Flanschabschnitt (20; 50) aufweist, der in der Nachbarschaft der Schweißverbindung (22; 52) angeordnet ist und gegen den der Körper (12) mittels der Befestigungsmutter (18) oder gegen den die Befestigungsmutter (48) selbst geschraubt ist.

6. Befestigungssystem nach einem der Ansprüche 3 - 4 und nach Anspruch 5, **dadurch gekennzeichnet, dass** die geschwächte Stelle (28; 58) in der Nachbarschaft des Flanschabschnittes (20; 50) angeordnet ist.

7. Befestigungssystem nach einem der Ansprüche 1 - 6, **dadurch gekennzeichnet, dass** der Gewindebolzen (16) ein Grobgewindebolzen (16) ist, dessen Außengewinde (26) beim Aufschrauben der Befestigungsmutter (18) ein Gewinde in deren Bohrung (32) schneidet.

8. Befestigungssystem nach einem der Ansprüche 1 - 6, **dadurch gekennzeichnet, dass** der Gewindebolzen (46) ein Feingewinde wie ein metrisches Gewinde (56) aufweist und dass die Befestigungsmutter (48) ein entsprechendes Innengewinde (62) aufweist.

9. Befestigungssystem nach einem der Ansprüche 1 - 8, **dadurch gekennzeichnet, dass** die Festigkeit des Gewindebolzens (16; 46) und die Festigkeit der Befestigungsmutter (18; 48) so aufeinander abgestimmt sind, dass bei einem Aufbringen eines Drehmomentes (M) auf die Befestigungsmutter (18; 48), das jenes Drehmoment (M_{N}) übersteigt, das bestimmungsgemäß beim Aufschrauben der Befestigungsmutter (18; 48) auf den Gewindebolzen (16; 46) aufgebracht wird, gewährleistet ist, dass die Befestigungsmutter (18; 48) strukturell beschädigt wird, bevor der Gewindebolzen (16; 46) strukturell beschädigt wird.

## Claims

1. A fixing system (10; 40) for fixing a body (12; 42) to a metallic component (14; 44), more particularly for fixing a body (12; 42) to a sheet metal such as an automotive body sheet (14; 44), comprising a metal threaded bolt (16; 46), which is fixed to the component (14; 44) by means of short-time arc welding, and a fixing nut (18; 48) that is screwed on the threaded bolt (16; 46) and by means of which the body (12; 42) is fixed to the component (14; 44),
**characterized in that**
the strength of the weld joint (22; 52) between the component (14; 44) and the threaded bolt (16; 46) and the strength of the threaded bolt (16; 46) itself are determined relative to one another in such a way as to ensure that the threaded bolt (16; 46) will break before the component (14; 44) breaks if a torque (M) is exerted on the fixing nut that exceeds the stipulated torque (M_{N}) that is exerted when the fixing nut (18; 48) is being duly screwed to the threaded bolt (16; 46).

2. A fixing system (10; 40) for fixing a body (12; 42) to a metal component (14; 44), more particularly for fixing a body (12; 42) to a sheet metal such as an automotive body sheet (14; 44), comprising a metal threaded bolt (16; 46), which is fixed to the component (14; 44) by means of short-time arc welding, and a fixing nut (18; 48) that is screwed on the threaded bolt (16; 46) and by means of which the body (12; 42) is fixed to the component (14; 44),
**characterized in that**
the strength of the weld joint (22; 52) between the component (14; 44) and the threaded bolt (16; 46) and the strength of the thread of the threaded bolt (16; 46) itself are determined relative to one another in such a way as to ensure that the thread of the threaded hole (16; 46) is damaged before the component (14; 44) breaks, if a torque (M) is exerted on the fixing nut, that exceeds the stipulated torque (M_{N}) that is exerted when the fixing nut (18; 48) is being duly screwed to the threaded bolt (16; 46).

3. The fixing system of claim 1, **characterized in that** the threaded bolt (16; 46) is weakened at a location (28; 58) and that the weakening (28; 58) is determined such that the threaded bolt (16; 46) breaks at the location of the weakening (28; 58) before the component (14; 44) breaks in the region of the weld joint (22; 52) between the component (14; 44) and the threaded bolt (16; 46).

4. The fixing system of claim 3, **characterized in that** the threaded bolt (16) comprises a weakening recess, more particularly a peripheral groove (30).

5. The fixing system of any of claims 1 - 4, **characterized in that** the threaded bolt (14; 46) comprises a flange portion (20; 50) that is arranged adjacent to the weld joint (22; 52) and against which the body (12) is screwed by means of the fixing nut (18) or against which the fixing nut (48) itself is screwed.

6. The fixing system of any of claims 3 - 4 and according to claim 5, **characterized in that** the weakened location (28; 58) is arranged adjacent to the flange portion (20; 50).

7. The fixing system of any of claims 1 - 6, **characterized in that** the threaded bolt (16) is a bolt (16) with a coarse outer thread (26) which cuts a thread into a bore (32) of the fixing nut (18), when screwing the fixing nut (18) to the bolt.

8. The fixing system of any of claims 1 - 6, **characterized in that** the threaded bolt (46) comprises a fine thread like a metric thread (56), and that the fixing nut (48) comprises a corresponding inner thread (62).

9. The fixing system of any of claims 1 - 8, **characterized in that** the strength of the threaded bolt (16; 46) and the strength of the fixing nut (18; 48) are determined relative to one another in such a way as to ensure that the fixing nut (18; 48) is structurally damaged before the threaded bolt (16; 46) is structurally damaged, if a torque (M) is exerted on the fixing nut (18; 48), that exceeds the stipulated torque (M_{N}) that is exerted when the fixing nut (18; 48) is being duly screwed on the threaded bolt (16; 46).

## Revendications

1. Système de fixation (10 ; 40) destirté à la fixation d'un corps (12 ; 42) sur une pièce métallique (14 ; 44), en particulier pour la fixation d'un corps (12 ; 42) sur une tôle métallique, telle qu'une tôle de carrosserie (14 ; 44) d'un véhicule automobile, comportant un boulon fileté (16 ; 46) métallique qui est fixé à la pièce (14 ; 44) au moyen d'un soudage à l'arc de courte durée, et un écrou de fixation (18 ; 48) qui est vissé sur le boulon fileté (16 ; 46) et au moyen duquel le corps (12 ; 42) est fixé sur la pièce (14 ; 44),
**caractérisé en ce que** la résistance de l'assemblage soudé (22 ; 52) entre la pièce (14 ; 44) et le boulon fileté (16 ; 46) et la résistance du boulon fileté (16 ; 46) lui-même sont ajustées l'une à l'autre de telle sorte que, lors de l'application d'un couple de rotation (M) sur l'écrou de fixation (18 ; 48), qui est supérieur au couple de rotation (M_{N}) qui est appliqué, conformément à sa fonction, lors du vissage de l'écrou de fixation (18 ; 48) sur le boulon fileté (16 ; 46), il est garanti que le boulon fileté (16 ; 46) casse avant que la pièce (14 ; 44) ne casse.

2. Système de fixation (10 ; 40) destiné à la fixation d'un corps (12 ; 42) sur une pièce métallique (14 ; 44), en particulier pour la fixation d'un corps (12 ; 42) sur une tôle métallique, telle qu'une tôle de carrosserie (14 ; 44) d'un véhicule automobile, comportant un boulon fileté (16 ; 46) métallique qui est fixé à la pièce (14 ; 44) au moyen d'un soudage à l'arc de courte durée, et un écrou de fixation (18 ; 48) qui est vissé sur le boulon fileté (16 ; 46) et au moyen duquel le corps (12 ; 42) est fixé sur la pièce (14 ; 44),
**caractérisé en ce que** la résistance de l'assemblage soudé (22 ; 52) entre la pièce (14 ; 44) et le boulon fileté (16 ; 46) et la résistance du filet du boulon fileté (16 ; 46) lui-même sont ajustées l'une à l'autre de telle sorte que, lors de l'application d'un couple de rotation (M) sur l'écrou de fixation (18 ; 48), qui est supérieur au couple de rotation (M_{N}) qui est appliqué, conformément à sa fonction, lors du vissage de l'écrou de fixation (18 ; 48) sur le boulon flleté (16 ; 46), il est garanti que le filet du boulon fileté (16 ; 46) est endommagé avant que la pièce (14 ; 44) ne casse.

3. Système de fixation selon la revendication 1, **caractérisé en ce que** le boulon fileté (16 ; 46) est affaibli dans une zone (28 ; 58) et **en ce que** l'affaiblissement (28 ; 58) est réalisé de telle sorte que le boulon fileté (16 ; 46) casse au niveau de l'emplacement de l'affaiblissement (28 ; 58) avant que la pièce (14 ; 44) ne casse dans la zone de l'assemblage soudé (22 ; 52) entre la pièce (14 ; 44) et le boulon fileté (16 ; 46).

4. Système de fixation selon la revendication 3, **caractérisé en ce que** le boulon fileté (16) comporte un évidement formant l'affaiblissement, en particulier une rainure périphérique (30).

5. Système de fixation selon l'une quelconque des revendications 1 à 4, **caractérisé en ce que** le boulon fileté (14 ; 46) comporte une zone de bride (20 ; 50) qui est agencée à proximité de l'assemblage soudé (22 ; 52) et contre laquelle est vissé le corps (12) au moyen de l'écrou de fixation (18) ou contre laquelle est vissé l'écrou de fixation (48) lui-même.

6. Système de fixation selon l'une quelconque des revendications 3 à 4 et selon la revendication 5, **caractérisé en ce que** la zone affaiblie (28 ; 58) est agencée à proximité de la zone de bride (20 ; 50).

7. Système de fixation selon l'une quelconque des revendications 1 à 6, **caractérisé en ce que** le boulon fileté (16) est un boulon fileté à pas grossier (16), dont le filet extérieur (26), lors du vissage de l'écrou de fixation (18), taille un filet dans la forure (32) de celui-ci.

8. Système de fixation selon l'une quelconque des revendications 1 à 6, **caractérisé en ce que** le boulon fileté (46) comporte un filet à pas fins, tel qu'un filet métrique (56) et **en ce que** l'écrou de fixation (48) comporte un filet intérieur (62) correspondant.

9. Système de fixation selon l'une quelconque des revendications 1 à 8, **caractérisé en ce que** la résistance du boulon fileté (16 ; 46) et la résistance de l'écrou de fixation (18 ; 48) sont ajustées l'une à l'autre de telle sorte que, lors de l'application d'un couple de rotation (M) sur l'écrou de fixation (18 ; 48), qui est supérieur au couple de rotation (M_{N}) qui est appliqué, conformément à sa fonction, lors du vissage de l'écrou de fixation (18 ; 48) sur le boulon fileté (16 ; 46), il est garanti que l'écrou de fixation (18 ; 48) est endommagé structurellement avant que le boulon fileté (16 ; 46) ne soit endommagé structurellement.
